(19) Europäisches Patentamt
European Patent Office
Office européen des brevets

(11) Veröffentlichungsnummer : **0 044 936**
**B1**

(12) # EUROPÄISCHE PATENTSCHRIFT

(45) Veröffentlichungstag der Patentschrift : **28.12.83**

(51) Int. Cl.³ : **C 09 B 45/01**, C 09 B 45/28

(21) Anmeldenummer : **81104600.2**

(22) Anmeldetag : **15.06.81**

(54) **Verfahren zur Herstellung von Kupferkomplexen von Polyazofarbstoffen.**

(30) Priorität : **26.06.80 DE 3023919**
**09.08.80 DE 3030191**

(43) Veröffentlichungstag der Anmeldung : **03.02.82 Patentblatt 82/05**

(45) Bekanntmachung des Hinweises auf die Patenterteilung : **28.12.83 Patentblatt 83/52**

(84) Benannte Vertragsstaaten : **CH DE FR GB LI**

(56) Entgegenhaltungen :
**DE-C- 670 935**
**DE-C- 868 033**

(73) Patentinhaber : **BAYER AG**
**Zentralbereich Patente, Marken und Lizenzen**
**D-5090 Leverkusen 1, Bayerwerk (DE)**

(72) Erfinder : **Gleinig, Harald, Dr.**
**Eichholzer Weg 100**
**D-5068 Odenthal (DE)**
Erfinder : **Birmes, Hartmut, Dr.**
**Luentenbeckerweg 46**
**D-5600 Wuppertal 11 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 044 936 B1

Verfahren zur Herstellung von Kupferkomplexen von Polyazofarbstoffen

Die vorliegende Erfindung betrifft ein neues Verfahren zur Herstellung von Kupferkomplexen von Polyazofarbstoffen aus den Komponenten 1,3-Dihydroxybenzol einer Aminogruppe tragenden Diazokomponente der Benzolreihe sowie zwei Aminogruppen tragende Diazokomponenten der Benzolreihe.

Das erfindungsgemäße Verfahren ist dadurch gekennzeichnet, daß man die Kupplung von 1,3-Dihydroxybenzol mit dem Diazoniumsalz der eine Aminogruppe tragenden Diazokomponente in Gegenwart eines $Cu^{2+}$-Ionen abgebenden Mittels bei Temperaturen von 20 bis 40 °C vornimmt und daß man das Kupplungsprodukt aus 1,3-Dihydroxybenzol und der eine Aminogruppe tragenden Diazokomponente der Benzolreihe nicht zwischenisoliert, sondern direkt mit dem Diazoniumsalz der zwei Aminogruppen tragenden Diazokomponente der Benzolreihe zum Polyazo-Produkt (vorzugsweise zum Bisazo-Produkt) umsetzt.

Die Umsetzung der obengenannten Komponenten zur Polyazo-Verbindung ist bereits gemäß dem Verfahren von DE-C-670 935 bekannt. Gemäß DE-C-670 935 ist die Herstellung der in Rede stehenden Kupferkomplex-Farbstoffe jedoch nur durch ein aufwendiges Herstellungsverfahren unter Isolierung der Cu-Komplexverbindung des Kupplungsproduktes aus 1,3-Dihydroxybenzol und der eine Aminogruppe tragenden Diazokomponente der Benzolreihe möglich, wobei diese Cu-Komplexverbindung nur durch Erhitzen der Lösung (bzw. Suspension auf höhere Temperatur, vorzugsweise durch Kochen in wäßriger Lösung hergestellt werden konnte. Das zwischenisolierte Kupfer-Komplexprodukt wurde dann in einen zweiten Reaktionsschritt mit der Diazoniumverbindung der zwei Aminogruppen tragenden Diazokomponente der Benzolreihe umgesetzt.

Demgegenüber ist das erfindungsgemäße Verfahren wesentlich eleganter. Es führt ohne Zwischenisolierung und bei niedriger Temperatur zu Produkten hoher Reinheit und weist gegenüber dem Verfahren nach DE-C-670 935 eine überraschende Ausbeuteerhöhung auf.

Das erfindungsgemäße Verfahren wird vorzugsweise zur Herstellung von Kupferkomplexsalzen der folgenden Struktur eingesetzt :

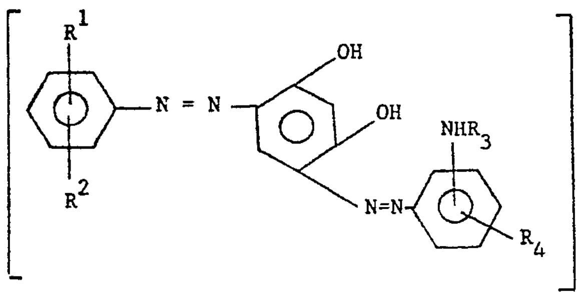

Cu-Komplex

wobei

$R_1$ = H, Alkoxy ($C_1$-$C_4$), Alkyl ($C_1$-$C_4$)
$R_2$ = H, $SO_3H$
$R_3$ = H, gegebenenfalls durch $NO_2$, Cl, Alkyl ($C_1$-$C_4$) substituiertes Phenyl
$R_4$ = $NO_2$, $SO_3H$.

Beim erfindungsgemäßen Verfahren sind Beispiele für eine Aminogruppe tragende Diazokomponente der Benzolreihe :

3-Amino-4-ethoxy-benzolsulfonsäure
3-Amino-4-methoxy-benzolsulfonsäure
3-Ethoxy-4-amino-benzolsulfonsäure
3-Methoxy-4-amino-benzolsulfonsäure
2-Methoxyanilin
2-Ethoxyanilin.

Beispiele für zwei Aminogruppen tragende Diazokomponenten der Benzolreihe :

1,3-Diamino-4-nitrobenzol
1,3-Diamino-5-nitrobenzol
1-Amino-4(N-p-Nitrophenyl)-3-sulfonsäure.

Beispiele für $Cu^{2+}$-Ionen abgegebene Verbindungen :

$CuSO_4 \cdot 5H_2O$, $CuCl_2$ und andere wasserlösliche Cu-II-Salze.

Beim erfindungsgemäßen Verfahren werden die einzelnen Komponenten vorzugsweise in folgendem Verhältnis eingesetzt (Zahlenangaben im Molverhältnis bezogen auf 1,3-Dihydroxybenzol).

Verhältnis 1,3-Dihydroxybenzol (A) : eine Aminogruppe tragende Diazokomponente der Benzolreihe (B) : zwei Aminogruppen tragende Diazokomponente der Benzolreihe (C) : $Cu^{2+}$-Ionen abgebende Verbindung (D) :

1 : (0,5-2) : (0,1-1) : (0,25-1)
(A) : (B) : (C) : (D)

Besonders bevorzugt ist folgendes Verhältnis :

1 : (1,2-1,7) : (0,3-0,8) : (0,5-0,8) :
(A) : (B) : (C) : (D)

Die Kupplung des 1,3-Dihydroxybenzol mit dem Diazoniumsalz der eine Aminogruppe tragenden Diazokomponente der Benzolreihe unter Anwesenheit der $Cu^{2+}$-Ionen abgebende Verbindung wird bei Temperaturen von 20 °C bis 40 °C und bei pH-Werten von 6 bis 10 durchgeführt. Die zweite Kupplungsreaktion mit den Diazoniumsalz der zwei Aminogruppen tragende Diazokomponente der Benzolreihe erfolgt vorzugsweise bei Temperaturen von 5 °C bis 35 °C und bei pH-Werten von 7 bis 13.

Die Isolierung der erfindungsgemäß hergestellten Farbstoffe erfolgt auf übliche Weise, z. B. durch Aussalzemit Alkalisalzen (vorzugsweise NaCl oder KCl), Walzentrocknung oder Zerstäubungstrocknung.

Die erfindungsgemäß hergestellten Farbstoffe sind vielseitig einsetzbar, sie finden beispielsweise Verwendung zum Färben von Leder.

Beispiel

22 g (0,2 Mol) 1,3-Dihydroxybenzol, 30 g $CuSO_4 \cdot 5H_2O$ (0,12 Mol) und 64,5 g Natriumcarbonat werden in 276 ml Wasser angerührt. Es entsteht eine wäßrige Suspension.

Aus 48,7 g (0,24 Mol) 3-Amino-4-methoxy-benzolsulfonsäure 55,3 ml Salzsäure (18° Bé) und 69,1 ml 25,3-prozentiger Natriumnitrit-Lösung wird ein Diazotierungsgemisch hergestellt. Dieses erste Diazotierungsgemisch gibt man langsam in die obengenannte wäßrige Suspension. Die Temperatur soll bei dieser Kupplungsreaktion nicht über 33 °C steigen. Am Ende dieser ersten Kupplung liegt der pH-Wert bei pH 8-8,5.

24,8 g (0,16 Mol) 1,3-Diamino-4-nitrobenzol werden mit 79,3 ml Salzsäure (18° Bé) und 23 ml 25,3 prozentiger Natriumnitrit-Lösung in 276,5 ml Wasser diazotiert. Man erhält ein zweites Diazotierungsgemisch.

Anschließend wird das Reaktionsgemisch der ersten Kupplung mit 64,5 ml 30 prozentiger Natronlauge auf pH 12-12,7 gebracht.

Dann gibt man das vorgenannte zweite Diazotierungsgemisch zur ersten Kupplung, dabei soll die Temperatur den Wert 30 °C nicht überschreiten.

Der pH-Wert am Ende dieser zweiten Kupplungsreaktion beträgt pH 8,5-9,0. Der sich absetzende Farbstoff der Formel

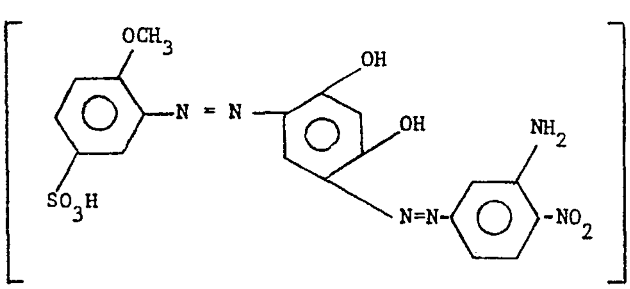

Cu-Komplex

wird mit 115 g Kochsalz ausgesalzen und in üblicher Art und Weise aufgearbeitet.

**Ansprüche**

1. Verfahren zur Herstellung von Kupferkomplexen von Polyazofarbstoffen aus den Komponenten 1,3-Dihydroxy-benzol, eine Aminogruppe tragende Diazokomponente der Benzolreihe und zwei Aminogruppen tragende Diazokomponente der Benzolreihe durch Kupplung im wäßrig alkalischen Medium, dadurch gekennzeichnet, daß man die Kupplung von 1,3-Dihydroxybenzol mit den Diazoniumsalz der eine Aminogruppe tragenden Diazokomponente der Benzolreihe in Gegenwart der $Cu^{2+}$-Ionen abgege-

benden Verbindung bei Temperaturen von 20 bis 40 °C durchführt und das entstehende Kupplungsprodukt vor der weiteren Umsetzung mit dem Diazoniumsalz der zwei Aminogruppen tragenden Diazokomponente der Benzolreihe nicht zwischenisoliert.

2. Verfahren nach Anspruch 1 zur Herstellung von Bis-azoverbindungen der allgemeinen Formel

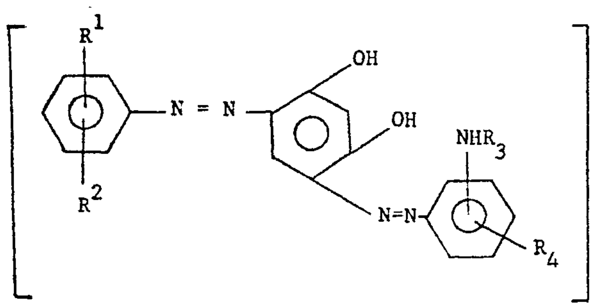

Cu-Komplex

in welcher

$R_1$ = H, Alkoxy ($C_1$-$C_4$), Alkyl ($C_1$-$C_4$)
$R_2$ = H, $SO_3H$
$R_3$ = H, gegebenenfalls durch $NO_2$, Cl, Alkyl ($C_1$-$C_4$) substituiertes Phenyl
$R_4$ = $NO_2$, $SO_3H$.

3. Verfahren nach Anspruch 1 zur Herstellung der Bis-azoverbindung der Formel

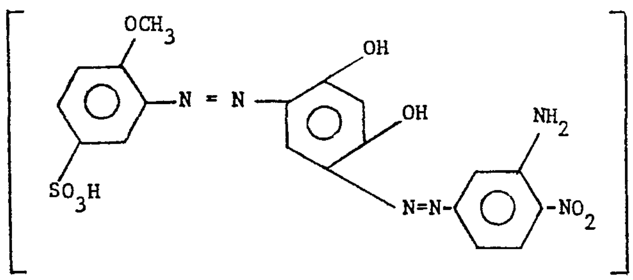

Cu-Komplex

4. Verfahren gemäß Anspruch 1 bis 3, dadurch gekennzeichnet, daß das Molverhältnis 1,3-Dihydroxybenzol (A) : eine Aminogruppe tragende Diazokomponente der Benzolreihe (b) : zwei Aminogruppen tragende Diazokomponente der Benzolreihe (C) :
$Cu^{2+}$-Ionen abgegebende Verbindung (D) wie folgt ist :

1 : (0,5-2) : (0,1-1) : (0,25-1)
(A) : (B) : (C) : (D).

5. Verfahren nach Anspruch 4, dadurch gekennzeichnet, daß das Molverhältnis (A) ; (B) ; (C) ; (D) folgende Werte annimmt

1 : (1,2-1,7) : (0,3-0,8) : (0,5-0,8)
(A) : (B) : (C) : (D)

6. Verfahren gemäß Anspruch 1 bis 5, dadurch gekennzeichnet, daß es sich bei der $Cu^{2+}$-Ionen abgebenden Verbindung um Kupfersulfat handelt.

## Claims

1. Process for the preparation of copper complexes of polyazo dyestuffs from components comprising 1.3-dihydroxy-benzene, a diazo component of the benzene series which carries one amino group and a diazo component of the benzene series which carries two amino groups, by coupling in an aqueous alkaline medium, characterised in that the coupling of 1.3-dihydroxybenzene with the diazonium salt of the diazo component of the benzene series which carries one amino group is carried out at temperatures from 20 to 40 °C in the presence of the compound which donates $Cu^{2+}$ ions, and the coupling product formed is not intermediately isolated before further reaction with the diazonium salt of the diazo component of the benzene series which carries two amino groups.

2. Process according to Claim 1 for the preparation of bisazo compounds of the general formula

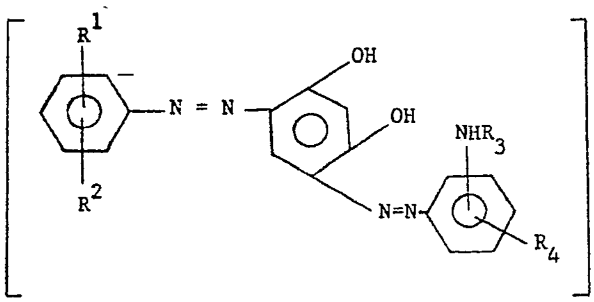

Cu complex

in which

$R_1$ denotes H, $C_1$-$C_4$-alkoxy or $C_1$-$C_4$-alkyl,

$R_2$ denotes H or $SO_3H$,

$R_3$ denotes H, or phenyl which is optionally substituted by $NO_2$, Cl or $C_1$-$C_4$-alkyl and

$R_4$ denotes $NO_2$ or $SO_3H$.

3. Process according to Claim 1 for the preparation of the bisazo compound of the formula

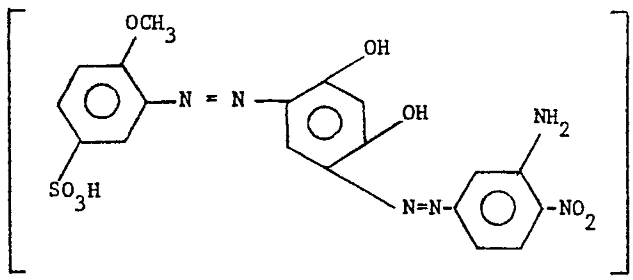

Cu complex

4. Process according to Claims 1 to 3, characterised in that the molar ratio of 1.3-dihydroxybenzene (A) : diazo component of the benzene series which carries one amino group (B) : diazo component of the benzene series which carries two amino groups (C) : compound which donates $Cu^{2+}$ ions (D), (A) : (B) : (C) : (D), is 1 : (0.5-2) : (0.1-1) : (0.25-1).

5. Process according to Claim 4, characterised in that the molar ratio (A) : (B) : (C) : (D) is 1 : (1.2-1.7) : (0.3-0.8) : (0.5-0.8).

6. Process according to Claims 1 to 5, characterised in that the compound which donates $Cu^{2+}$ ions is copper sulphate.

**Revendications**

1. Procédé de préparation de complexes de cuivre de colorants polyazoïques à partir des composants 1,3-dihydroxybenzènes, un composant diazotable de la série benzénique portant un groupe amino et un composant diazotable de la série benzénique portant deux groupes amino, par copulation en milieu aqueux alcalin, caractérisé en ce que l'on procède à la copulation du 1,3-dihydroxybenzène avec le sel de diazonium du composant diazotable de la série benzénique portant un groupe amino en présence du composé fournissant des ions $Cu^{+2}$ à des températures de 20 à 40 °C et en ce que l'on n'isole pas le produit de copulation obtenu avant la réaction subséquente avec le sel de diazonium du composant diazotable de la série benzénique portant deux groupes amino.

2. Procédé selon la revendication 1, pour la préparation de composés bis-azoïques de formule générale

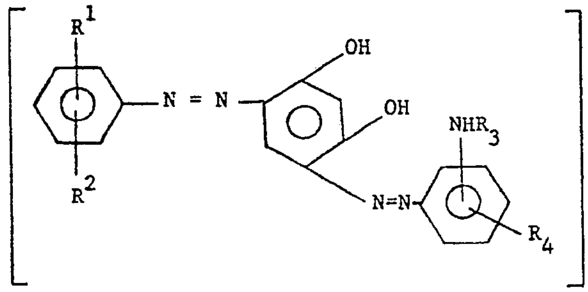

Complexe de Cu

dans laquelle

$R_1$ = H, alcoxy en $C_1$-$C_4$, alkyle en $C_1$-$C_4$,

$R_2$ = H, $SO_3H$,

$R_3$ = H, phényle éventuellement substitué par $NO_2$, Cl, alkyle en $C_1$-$C_4$,

$R_4$ = $NO_2$, $SO_3H$.

3. Procédé selon la revendication 1, pour la préparation du composé bis-azoïque de formule

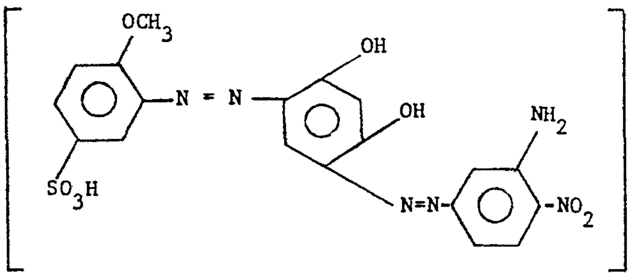

Complexe de Cu

4. Procédé selon les revendications 1 à 3, caractérisé en ce que les proportions molaires entre le 1,3-dihydroxybenzène (A) : le composant diazotable de la série benzénique portant un groupe amino (B) : le composant diazotable de la série benzénique portant deux groupes amino (C) : le composé (D) fournissant des ions $Cu^{+2}$ sont les suivantes :

1 : (0,5-2) : (0,1-1) : (0,25-1)
(A) : (B) : (C) : (D)

5. Procédé selon la revendication 4, caractérisé en ce que les proportions molaires (A) : (B) : (C) : (D) sont les suivantes :

1 : (1,2-1,7) : (0,3-0,8) : (0,5-0,8)
(A) : (B) : (C) : (D)

6. Procédé selon les revendications 1 à 5, caractérisé en ce que le composé fournissant des ions $Cu^{+2}$ est le sulfate de cuivre.